(19) **Europäisches Patentamt** **European Patent Office** **Office européen des brevets**

(11) **EP 2 459 645 B1**

(12) **FASCICULE DE BREVET EUROPEEN**

(45) Date de publication et mention de la délivrance du brevet:
**30.04.2014 Bulletin 2014/18**

(51) Int Cl.:
***C08L 53/00*** (2006.01)   ***B60C 1/00*** (2006.01)
***C08K 3/34*** (2006.01)

(21) Numéro de dépôt: **10735286.6**

(22) Date de dépôt: **22.07.2010**

(86) Numéro de dépôt international:
**PCT/EP2010/060632**

(87) Numéro de publication internationale:
**WO 2011/012529 (03.02.2011 Gazette 2011/05)**

(54) **OBJET PNEUMATIQUE POURVU D'UNE COUCHE ÉTANCHE AUX GAZ À BASE D'UN ÉLASTOMÈRE THERMOPLASTIQUE ET D'UNE CHARGE LAMELLAIRE**

DRUCKLUFTGEGENSTAND MIT GASUNDURCHLÄSSIGER SCHICHT MIT EINEM THERMOPLASTISCHEN ELASTOMER UND LAMINAREM FÜLLER

PNEUMATIC OBJECT PROVIDED WITH A GASTIGHT LAYER CONTAINING A THERMOPLASTIC ELASTOMER AND A LAMINAR FILLER

(84) Etats contractants désignés:
**AL AT BE BG CH CY CZ DE DK EE ES FI FR GB GR HR HU IE IS IT LI LT LU LV MC MK MT NL NO PL PT RO SE SI SK SM TR**

(30) Priorité: **27.07.2009 FR 0955227**

(43) Date de publication de la demande:
**06.06.2012 Bulletin 2012/23**

(73) Titulaires:
• **COMPAGNIE GENERALE DES ETABLISSEMENTS MICHELIN**
**63000 Clermont-Ferrand (FR)**
• **MICHELIN Recherche et Technique S.A.**
**1763 Granges-Paccot (CH)**

(72) Inventeurs:
• **ABAD, Vincent**
**F-63400 Chamalières (FR)**
• **CUSTODERO, Emmanuel**
**F-63400 Chamalières (FR)**
• **LEMAL, Vincent**
**63410 Loubeyrat (FR)**

(74) Mandataire: **Dequire, Philippe Jean-Marie Denis**
**23, place des Carmes-Déchaux**
**DGD/PI F35 Ladoux**
**63040 Clermont-Ferrand Cedex 9 (FR)**

(56) Documents cités:
**WO-A1-2009/007064   JP-A- 2009 013 259**

**Description**

La présente invention est relative aux objets « pneumatiques », c'est-à-dire, par définition, aux objets qui prennent leur forme utilisable quand on les gonfle d'air ou d'un gaz de gonflage équivalent.

Elle se rapporte plus particulièrement aux couches étanches aux gaz assurant l'étanchéité de ces objets pneumatiques, en particulier celle des bandages pneumatiques.

Dans un bandage pneumatique conventionnel du type « tubeless » (c'est-à-dire sans chambre à air), la face radialement interne comporte une couche étanche à l'air (ou plus généralement à tout gaz de gonflage) qui permet le gonflement et le maintien sous pression du bandage pneumatique. Ses propriétés d'étanchéité lui permettent de garantir un taux de perte de pression relativement faible, permettant de maintenir le bandage gonflé en état de fonctionnement normal pendant une durée suffisante, normalement de plusieurs semaines ou plusieurs mois. Elle a également pour fonction de protéger l'armature de carcasse et plus généralement le reste du pneumatique d'un risque d'oxydation dû à la diffusion d'air provenant de l'espace intérieur au bandage.

Cette fonction de couche interne ou « gomme intérieure » (*"inner liner"*) étanche est aujourd'hui remplie par des compositions à base de caoutchouc butyl (copolymère d'isobutylène et d'isoprène), reconnues depuis fort longtemps pour leurs excellentes propriétés d'étanchéité.

Toutefois, un inconvénient bien connu des compositions à base de caoutchouc ou élastomère butyl est qu'elles présentent des pertes hystérétiques importantes, qui plus est sur un spectre large de température, inconvénient qui pénalise la résistance au roulement des bandages pneumatiques.

Diminuer l'hystérèse de ces couches internes d'étanchéité et donc in fine la consommation de carburant des véhicules automobiles, est un objectif général auquel se heurte la technologie actuelle.

Le document WO 2009/007064 des Demanderesses divulgue un objet pneumatique pourvu d'une couche étanche aux gaz de gonflage, dans lequel la couche étanche comporte une composition élastomère comprenant au moins un élastomère thermoplastique styrénique (« TPS ») et une charge lamellaire dans lequel l'élastomère thermoplastique le taux volumique de la charge lamellaire est supérieur à 5% (% en volume de la composition élastomère). Comparativement à un caoutchouc butyl, l'élastomère thermoplastique styrénique présente l'avantage majeur, en raison de sa nature thermoplastique, de pouvoir être travaillé tel quel à l'état fondu (liquide), et par conséquent d'offrir une possibilité de mise en oeuvre simplifiée ; il s'est révélé en outre compatible avec l'emploi de charge lamellaire à des taux particulièrement élevés, ce qui permet d'améliorer l'étanchéité comparativement aux solutions connues de l'art antérieur à base de caoutchouc butyl.

En poursuivant leurs recherches, les Demanderesses ont découvert qu'un choix judicieux des charges lamellaires permet encore d'améliorer les propriétés d'étanchéité des couches étanches à base d'élastomère thermoplastique styrénique (TPS).

Selon un premier objet, la présente invention concerne un objet pneumatique similaire dans lequel la composition élastomère comprend une charge lamellaire de diamètre équivalent ($D_v(0,5)$) compris entre 20 et 45 micromètres et de facteur de forme (F) supérieur à 65 avec :

$$F = \frac{S_{BET}}{S_{sphère}} = \frac{\rho S_{BET} D_v(0,5)}{6},$$

dans lequel :

- $S_{BET}$ est la surface spécifique de la charge lamellaire mesurée par BET en $m^2/g$ ;
- $S_{sphère}$ est la surface spécifique en $m^2/g$ d'une sphère de diamètre équivalent $D_v(0,5)$ identique ;
- $Dv(0,5)$ est le diamètre équivalent en $\mu m$ ; et
- $p$ est la masse volumique de la charge lamellaire en $g/cm^3$.

L'invention concerne particulièrement les objets pneumatiques en caoutchouc tels que des bandages pneumatiques, ou les chambres à air, notamment les chambres à air pour bandage pneumatique.

L'invention concerne plus particulièrement les bandages pneumatiques destinés à équiper des véhicules à moteur de type tourisme, SUV (*"Sport Utility Vehicles"*), deux roues (notamment motos, vélos), avions, comme des véhicules industriels choisis parmi camionnettes, « Poids-lourd » - c'est-à-dire métro, bus, engins de transport routier (camions, tracteurs, remorques), véhicules hors-la-route tels qu'engins agricoles ou de génie civil -, autres véhicules de transport ou de manutention.

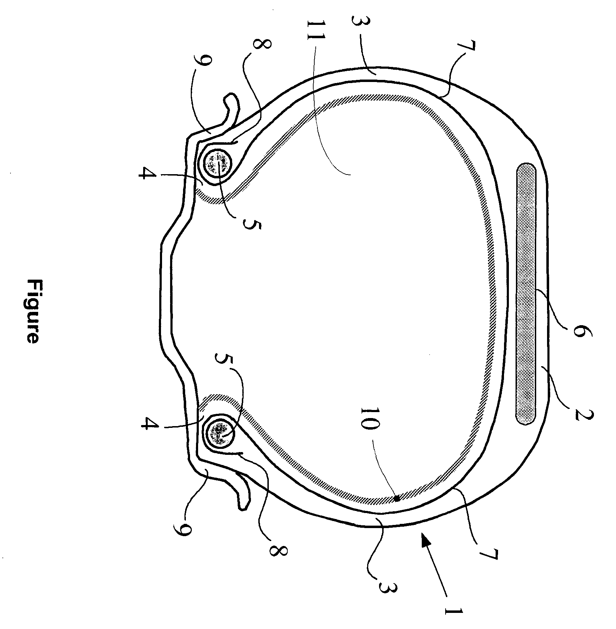

L'invention ainsi que ses avantages seront aisément compris à la lumière de la description et des exemples de réalisation qui suivent, ainsi que de la figure unique relative à ces exemples qui schématise, en coupe radiale, un bandage pneumatique conforme à un objet de l'invention.

## I. <u>DESCRIPTION DETAILLEE</u> DE **L'INVENTION**

Dans la présente description, sauf indication expresse différente, tous les pourcentages (%) indiqués sont des % en masse.

D'autre part, tout intervalle de valeurs désigné par l'expression « entre a et b » représente le domaine de valeurs allant de plus de a à moins de b (c'est-à-dire bornes a et b exclues) tandis que tout intervalle de valeurs désigné par l'expression « de a à b » signifie le domaine de valeurs allant de a jusqu'à b (c'est-à-dire incluant les bornes strictes a et b).

I-1. <u>Composition élastomère étanche aux gaz</u>

L'objet pneumatique selon l'invention a pour caractéristique essentielle d'être pourvu d'une couche étanche aux gaz de gonflage comportant une composition élastomère comprenant au moins un élastomère thermoplastique TPS auquel est associé une charge lamellaire de diamètre équivalent $D_v$ (0,5) compris entre 20 et 45 micromètres ($\mu$m), et de facteur de forme F supérieur à 65, et optionnellement une huile d'extension de l'élastomère.

I-1-A. <u>Élastomère thermoplastique</u>

Les élastomères thermoplastiques (en abrégé « TPE ») ont une structure intermédiaire entre polymères thermoplastiques et élastomères. Ils sont constitués de séquences rigides thermoplastiques reliées par des séquences souples élastomères, par exemple polybutadiène, polyisoprène, poly(éthylène/butylène), ou encore polyisobutylène. Ce sont souvent des élastomères triblocs avec deux segments rigides reliés par un segment souple. Les segments rigides et souples peuvent être disposés linéairement, en étoile ou branchés. Typiquement, chacun de ces segments ou blocs contient au minimum plus de 5, généralement plus de 10 unités de base (par exemple unités styrène et unités isoprène pour un copolymère blocs styrène/ isoprène/ styrène).

L'élastomère TPS selon un objet de l'invention est caractérisé en ce qu'il est choisi parmi les élastomères thermoplastiques styréniques. Par monomère styrénique doit être entendu dans la présente description tout monomère à base de styrène, non substitué comme substitué ; parmi les styrènes substitués peuvent être cités par exemple les méthylstyrènes (par exemple l'o-méthylstyrène, le m-méthylstyrène ou le p-méthylstyrène, l'alpha-méthylstyrène, l'alpha-2-diméthylstyrène, l'alpha-4-diméthylstyrène ou le diphényléthylène), le para-tertiobutylstyrène, les chlorostyrènes (par exemple l'o-chlorostyrène, le m-chlorostyrène, le p-chlorostyrène, le 2,4-dichlorostyrène, le 2,6-dichlorostyrène ou le 2,4,6-trichlorostyrène), les bromostyrènes (par exemple l'o-bromostyrène, le m-bromostyrène, le p-bromostyrène, le 2,4-dibromostyrène, le 2,6-dibromostyrène ou les 2,4,6-tribromostyrène), les fluorostyrènes (par exemple l'o-fluorostyrène, le m-fluorostyrène, le p-fluorostyrène, le 2,4-difluorostyrène, le 2,6-difluorostyrène ou les 2,4,6-trifluorostyrène) ou encore le para-hydroxy-styrène.

L'élastomère thermoplastique styrénique comporte un élastomère à base de butyl.

De préférence, l'élastomère thermoplastique TPS est un copolymère à blocs polystyrène et polyisobutylène. Par une telle définition doit être entendu tout copolymère thermoplastique comportant au moins un bloc polystyrène (c'est-à-dire un ou plusieurs blocs polystyrène) et au moins un bloc polyisobutylène (c'est-à-dire un ou plusieurs blocs polyisobutylène), auxquels peuvent être associés ou non d'autres blocs (par exemple polyéthylène et/ou polypropylène) et/ou d'autres unités monomères (par exemple des unités insaturées telles que diéniques).

Plus préférentiellement encore, un tel copolymère blocs est un copolymère tribloc styrène/ isobutylène/ styrène (en abrégé « SIBS »). Par élastomère ou copolymère SIBS on entend dans la présente demande, par définition, tout élastomère tribloc styrène/ isobutylène/ styrène dans lequel le bloc central polyisobutylène peut être interrompu ou non par une ou plusieurs unités insaturées, en particulier une ou plusieurs unités diéniques telles qu'isopréniques, éventuellement halogénées.

Selon un mode de réalisation préférentiel de l'invention, le taux pondéral de styrène, dans l'élastomère styrénique est compris entre 5% et 50%. En dessous du minimum indiqué, le caractère thermoplastique de l'élastomère risque de diminuer de manière sensible tandis qu'au-dessus du maximum préconisé, l'élasticité de la couche étanche peut être affectée. Pour ces raisons, le taux de styrène est plus préférentiellement compris entre 10% et 40%, en particulier entre 15 et 35%.

On préfère que la température de transition vitreuse (Tg, mesurée selon ASTM D3418) de l'élastomère TPS soit inférieure à - 20°C, plus préférentiellement inférieure à - 40°C. Une valeur de Tg supérieure à ces minima peut diminuer les performances de la couche étanche lors d'une utilisation à très basse température ; pour une telle utilisation, la Tg de l'élastomère TPS est plus préférentiellement encore inférieure à - 50°C.

La masse moléculaire moyenne en nombre (notée Mn) de l'élastomère TPS est préférentiellement comprise entre 30 000 et 500 000 g/mol, plus préférentiellement comprise entre 40 000 et 400 000 g/mol. En dessous des minima indiqués, la cohésion entre les chaînes de l'élastomère, notamment en raison de l'éventuelle dilution de ce dernier par une huile d'extension, risque d'être affectée ; d'autre part, une augmentation de la température d'usage risque d'affecter les propriétés mécaniques, notamment les propriétés à la rupture, avec pour conséquence une performance diminuée « à chaud ». Par ailleurs, une masse Mn trop élevée peut être pénalisante pour la souplesse de la couche étanche aux gaz. Ainsi, on a constaté qu'une valeur comprise dans un domaine de 50 000 à 300 000 g/mol était particulièrement bien adaptée, notamment à une utilisation de la composition dans un bandage pneumatique.

La masse moléculaire moyenne en nombre (Mn) de l'élastomère TPS est déterminée de manière connue, par chromatographie d'exclusion stérique (SEC). L'échantillon est préalablement solubilisé dans du tétrahydrofuranne à une concentration d'environ 1 g/l ; puis la solution est filtrée sur filtre de porosité 0,45 $\mu$m avant injection. L'appareillage utilisé est une chaîne chromatographique « WATERS alliance ». Le solvant d'élution est le tétrahydrofuranne, le débit de 0,7 ml/min, la température du système de 35°C et la durée d'analyse de 90 min. On utilise un jeu de quatre colonnes WATERS en série, de dénominations commerciales « STYRAGEL » (« HMW7 », « HMW6E » et deux « HT6E »). Le volume injecté de la solution de l'échantillon de polymère est de 100 $\mu$l. Le détecteur est un réfractomètre différentiel « WATERS 2410 » et son logiciel associé d'exploitation des données chromatographiques est le système « WATERS MILLENIUM ». Les masses molaires moyennes calculées sont relatives à une courbe d'étalonnage réalisée avec des étalons de polystyrène.

L'indice de polydispersité Ip (rappel : Ip = Mw/Mn avec Mw masse moléculaire moyenne en poids) de l'élastomère TPS est de préférence inférieur à 3 ; plus préférentiellement Ip est inférieur à 2.

L'élastomère TPS et la charge lamellaire peuvent constituer à eux seuls la couche élastomère étanche aux gaz ou bien être associés, dans la composition élastomère, à d'autres élastomères.

Si d'éventuels autres élastomères sont utilisés dans la composition, l'élastomère TPS constitue l'élastomère majoritaire en poids ; il représente alors de préférence plus de 50%, plus préférentiellement plus de 70% en poids de l'ensemble des élastomères présents dans la composition élastomère. De tels élastomères complémentaires, minoritaires en poids, pourraient être par exemple des élastomères diéniques tels que du caoutchouc naturel ou un polyisoprène synthétique, un caoutchouc butyl ou des élastomères thermoplastiques autres que styréniques, dans la limite de la compatibilité de leurs microstructures.

Toutefois, selon un mode de réalisation particulier, l'élastomère TPS, en particulier SIBS, est le seul élastomère, et le seul élastomère thermoplastique présent dans la composition élastomère de la couche étanche aux gaz.

Les élastomères TPS peuvent être mis en oeuvre de façon classique, par extrusion ou moulage, par exemple à partir d'une matière première disponible sous la forme de billes ou de granulés.

Les élastomères TPS sont disponibles commercialement, vendus par exemple en ce qui concerne les SIBS par la société KANEKA sous la dénomination « SIBSTAR » (e.g. « Sibstar 102T », « Sibstar 103T » ou « Sibstar 073T »). Ils ont par exemple été décrits, ainsi que leur synthèse, dans les documents brevet EP 731 112, US 4 946 899, US 5 260 383. Ils ont été développés tout d'abord pour des applications biomédicales puis décrits dans diverses applications propres aux élastomères TPS, aussi variées que matériel médical, pièces pour automobile ou pour électroménager, gaines pour fils électriques, pièces d'étanchéité ou élastiques (voir par exemple EP 1 431 343, EP 1 561 783, EP 1 566 405, WO 2005/103146).

I-1-B. <u>Charge lamellaire</u>

L'utilisation de charge lamellaire permet avantageusement d'abaisser le coefficient de perméabilité (donc d'augmenter l'étanchéité) de la composition élastomère, sans augmenter de façon excessive son module, ce qui permet de conserver la facilité d'intégration de la couche étanche dans l'objet pneumatique.

Les charges dites lamellaires (en anglais *"platy fillers"*) sont bien connues de l'homme du métier. Elles ont été utilisées notamment dans des bandages pneumatiques pour réduire la perméabilité des couches étanches aux gaz conventionnelles à base de caoutchouc butyl.

Elles se présentent généralement sous forme de plaques, plaquettes, feuilles ou feuillets empilés, avec une anisométrie plus ou moins marquée.

Les dimensions de ces charges ont été mesurées à l'aide d'un granulomètre laser. Un granulomètre laser donne accès à une grandeur appelée diamètre équivalent, Dv (0,5) qui est le diamètre en dessous duquel 50% de la population totale est présente.

Les mesures de Dv (0,5) ont été réalisées sur un granulomètre laser Mastersizer S (Malvern Instruments ; présentation 3$$D, modèle de Fraunhofer). Les résultats donnés sont exprimés en micromètres ou $\mu$m et correspondent à une moyenne de trois mesures.

Le principe de l'appareil est le suivant : un faisceau laser traverse une cellule dans laquelle les particules à analyser son mises en circulation. Les objets éclairés par le laser dévient la lumière de son axe principal. La quantité de lumière déviée et l'importance de l'angle de déviation permettent de mesurer avec précision la taille des particules.

La prise d'essai est ajustée en fonction de l'obscuration obtenue : pour que la mesure soit bonne, la quantité de lumière déviée/absorbée par l'échantillon par rapport au rayon incident doit être comprise entre 15% et 35%. Pour toutes les mesures effectuées on se trouve dans ce cas de figure. La prise d'essai est variable selon les échantillons (de 10 à 80 mg). Les charges lamellaires ont été étudiées en suspension dans l'eau ou de l'éthanol selon leur nature. L'homme de l'art peut ajuster les conditions de réalisation de la suspension de façon à en assurer la stabilité, notamment en utilisant des ultrasons pour réaliser la dispersion de la charge dans le médium.

Le résultat se présente sous la forme d'une courbe de distribution volumique en fonction de la taille de particule. Le diamètre équivalent $D_v$ (0,5) correspond au diamètre en-dessous duquel 50 % de la population totale est présente.

On a aussi mesuré la surface spécifique des charges lamellaires par adsorption d'azote, méthode BET.

La méthode BET consiste à déterminer la surface spécifique à partir de la quantité d'azote adsorbée à l'équilibre sous la forme d'une couche mono moléculaire à la surface du matériau analysé.

L'adsorption physique est un état d'équilibre qui dépend de la température : la condensation des molécules gazeuses sur la surface du solide est favorisée par un abaissement de la température (azote liquide). Le phénomène est décrit par une isotherme d'adsorption représentant la quantité de gaz adsorbé (azote) sur le solide en fonction de la pression.

La mesure est effectuée sur une prise d'essai comprise entre 0.5 et 1.0 g (pesée à 0,0001 g près), de façon à remplir le tube échantillon aux ¾ de sa contenance.

L'échantillon est dégazé pendant 1 heure à 300°C (ce temps est décompté à partir du moment où le vide est atteint dans le tube échantillon, soit environ 20 mm Hg).

Après dégazage, le tube échantillon est pesé à 0,0001 g près, de façon à connaître la prise d'essai de l'échantillon sec. Le tube échantillon est positionné sur l'appareil BET. Une isotherme d'adsorption est réalisée à partir de 7 pressions relatives $P/P_0$, comprises entre 0.05 et 0.3 mm $P/P_0$. Le logiciel de l'appareil de mesure calcule la transformée BET et détermine la surface BET de l'échantillon. Le résultat de mesure est exprimé à 0,1 $m^2$/g près.

$P/P_0$ : Pression d'azote dans le tube échantillon / Pression de vapeur saturante de l'azote à la température de mesure.

On définit le facteur de forme (F) d'une charge lamellaire par le rapport entre la surface spécifique réelle $S_{BET}$ mesurée par la méthode BET d'adsorption d'azote et exprimée en $m^2$/g et la surface spécifique d'une sphère de même masse volumique et de diamètre équivalent $D_v$ (0,5) identique $S_{sphère}$ :

$$F = \frac{S_{BET}}{S_{sphère}} = \frac{\rho S_{BET} D_v(0,5)}{6}$$

Préférentiellement, les charges lamellaires utilisées conformément à l'invention sont choisies dans le groupe constitué par les graphites, les phyllosilicates et les mélanges de telles charges. Parmi les phyllosilicates, on citera notamment les argiles, talcs, micas, kaolins, ces phyllosilicates pouvant être modifiés ou non par exemple par un traitement de surface.

On utilise préférentiellement des charges lamellaires telles les micas.

Comme exemples de micas correspondant à un objet de l'invention, on peut citer les micas commercialisés par la société CMMP (Mica-Soft15®), ceux commercialisés par la société YAMAGUCHI (A51S, A41S, SYA-21R, SYA-21RS, SYA-41R). La masse volumique p de ces charges est de 2,85 g/$cm^3$.

Les charges lamellaires décrites ci-dessus sont utilisées à des taux variables, compris entre 2 et 30%, en volume de composition élastomère, et de préférence entre 3 et 20% en volume.

Les charges lamellaires dont le diamètre équivalent $D_v$ (0,5) est compris entre 20 et 45 $\mu$m et dont le facteur de forme F est supérieur à 65 permettent d'améliorer encore les performances d'étanchéité des couches étanches.

L'introduction des charges lamellaires dans la composition thermoplastique élastomère peut être réalisée selon divers procédés connus, par exemple par mélangeage en solution, par mélangeage en masse dans un mélangeur interne, ou encore par mélangeage par extrusion. Il est particulièrement important de noter que lors de l'introduction des charges lamellaires dans un élastomère TPS à l'état liquide, les efforts de cisaillement dans la composition sont très réduits et ne modifient que très peu les distributions de taille et le facteur de forme initial des charges lamellaires.

I-1-C. Huile d'extension

L'élastomère TPS et la charge lamellaire sont suffisants à eux seuls pour que soit remplie la fonction d'étanchéité aux gaz vis-à-vis des objets pneumatiques dans lesquels ils sont utilisés.

Toutefois, selon un mode de réalisation préférentiel de l'invention, la composition élastomère précédemment décrite comporte également, à titre d'agent plastifiant, une huile d'extension (ou huile plastifiante) dont la fonction est de faciliter la mise en oeuvre de la couche étanche aux gaz, particulièrement son intégration dans l'objet pneumatique par un abaissement du module et une augmentation du pouvoir tackifiant.

On peut utiliser toute huile d'extension, de préférence à caractère faiblement polaire, apte à étendre, plastifier des élastomères, notamment thermoplastiques. A température ambiante (23°C), ces huiles, plus ou moins visqueuses, sont des liquides (c'est-à-dire, pour rappel, des substances ayant la capacité de prendre à terme la forme de leur contenant), par opposition notamment à des résines ou des caoutchoucs qui sont par nature solides.

De préférence, l'huile d'extension est choisie dans le groupe constitué par les huiles polyoléfiniques (c'est-à-dire issues de la polymérisation d'oléfines, monooléfines ou dioléfines), les huiles paraffiniques, les huiles naphténiques (à basse ou haute viscosité), les huiles aromatiques, les huiles minérales, et les mélanges de ces huiles.

Si l'on a constaté que l'ajout d'huile se faisait certes au prix d'une certaine perte d'étanchéité, variable selon le type et la quantité d'huile utilisée, cette perte d'étanchéité peut être largement corrigée en ajustant le taux de charge lamellaire.

On utilise préférentiellement une huile du type polybutène, en particulier une huile polyisobutylène (en abrégé « PIB »), qui a démontré le meilleur compromis de propriétés comparativement aux autres huiles testées, notamment à une huile conventionnelle du type paraffinique.

A titre d'exemples, des huiles polyisobutylène sont commercialisées notamment par la société UNIVAR sous la dénomination « Dynapak Poly » (e.g. « Dynapak Poly 190 »), par INEOS Oligomer sous la dénomination « INDOPOL H1200 »), par BASF sous les dénominations « Glissopal » (e.g. « Glissopal 1000 ») ou « Oppanol » (e.g. « Oppanol B12 ») ; des huiles paraffiniques sont commercialisées par exemple par EXXON sous la dénomination « Telura 618 » ou par Repsol sous la dénomination « Extensol 51 ».

La masse moléculaire moyenne en nombre (Mn) de l'huile d'extension est préférentiellement comprise entre 200 et 25 000 g/mol, plus préférentiellement encore comprise entre 300 et 10 000 g/mol. Pour des masses Mn trop basses, il existe un risque de migration de l'huile à l'extérieur de la composition et un tack excessif, tandis que des masses trop élevées peuvent entraîner une rigidification excessive de cette composition. Une masse Mn comprise entre 350 et 4 000 g/mol, en particulier entre 400 et 3 000 g/mol, s'est avérée constituer un excellent compromis pour les applications visées, en particulier pour une utilisation dans un bandage pneumatique.

La masse moléculaire moyenne en nombre (Mn) de l'huile d'extension est déterminée par SEC, selon le mode opératoire précédemment décrit.

L'homme du métier saura, à la lumière de la description et des exemples de réalisation qui suivent, ajuster la quantité d'huile d'extension en fonction des conditions particulières d'usage de la couche élastomère étanche aux gaz, notamment de l'objet pneumatique dans lequel elle est destinée à être utilisée.

On préfère que le taux d'huile d'extension soit supérieur à 5 pce, de préférence compris entre 5 et 150 pce (parties en poids pour cent parties d'élastomère total, c'est-à-dire élastomère TPS plus tout autre élastomère éventuel présent dans la composition ou couche élastomère).

En dessous du minimum indiqué, la composition élastomère risque de présenter une rigidité trop forte pour certaines applications tandis qu'au-delà du maximum préconisé, on s'expose à un risque de cohésion insuffisante de la composition et de perte d'étanchéité pouvant être néfaste selon l'application considérée.

Pour ces raisons, en particulier pour une utilisation de la composition étanche dans un bandage pneumatique, on préfère que le taux d'huile d'extension soit supérieur à 10 pce, notamment compris entre 10 et 130 pce, plus préférentiellement encore qu'il soit supérieur à 20 pce, notamment compris entre 20 et 100 pce.

I-1-D. Additifs divers

La couche ou composition étanche à l'air décrite précédemment peut comporter par ailleurs les divers additifs usuellement présents dans les couches étanches à l'air connues de l'homme du métier. On citera par exemple des charges renforçantes telles que du noir de carbone ou de la silice, des charges non renforçantes ou inertes autres que les charges lamellaires précédemment décrites, des agents colorants avantageusement utilisables pour la coloration de la composition, des plastifiants autres que les huiles d'extension précitées, des résines tackifiantes, des agents de protection tels que antioxydants ou antiozonants, anti-UV, divers agents de mise en oeuvre ou autres stabilisants, ou encore des promoteurs aptes à favoriser l'adhésion au reste de la structure de l'objet pneumatique.

Outre les élastomères (thermoplastiques styréniques et autres élastomères éventuels) précédemment décrits, la composition étanche aux gaz pourrait aussi comporter, toujours selon une fraction pondérale minoritaire par rapport à l'élastomère TPS, des polymères autres que des élastomères, tels que par exemple des polymères thermoplastiques.

La couche ou composition étanche aux gaz précédemment décrite est un composé solide au comportement élastique (à 23°C), qui se caractérise notamment, grâce à sa formulation spécifique, par une très haute souplesse et très haute déformabilité.

I-2. Utilisation de la couche étanche à l'air dans un bandage pneumatique

La couche ou composition à base d'élastomère TPS précédemment décrite est utilisable comme couche étanche à l'air dans tout type d'objet pneumatique. A titre d'exemples de tels objets pneumatiques, on peut citer les bateaux pneumatiques, les ballons ou balles utilisées pour le jeu ou le sport.

Elle est particulièrement bien adaptée à une utilisation comme couche étanche à l'air (ou tout autre gaz de gonflage, par exemple azote) dans un objet pneumatique, produit fini ou semi-fini, en caoutchouc, tout particulièrement dans un bandage pneumatique pour véhicule automobile tel qu'un véhicule de type deux roues, tourisme ou industriel. Par industriel, on entend les camionnettes, « Poids-lourd » - c'est-à-dire métro, bus, engins de transport routier (camions, tracteurs, remorques), véhicules hors-la-route tels qu'engins agricoles ou de génie civil -, et autres véhicules de transport ou de manutention.

Une telle couche étanche à l'air est préférentiellement disposée sur la paroi interne de l'objet pneumatique, mais elle peut être également intégrée complètement à sa structure interne.

L'épaisseur de la couche étanche à l'air est préférentiellement supérieure à 0,05 mm, plus préférentiellement comprise entre 0,1 mm et 10 mm (notamment entre 0,1 et 1,0 mm).

On comprendra aisément que, selon les domaines d'application spécifiques, les dimensions et les pressions en jeu, le mode de mise en oeuvre de l'invention peut varier, la couche étanche à l'air comportant alors plusieurs gammes d'épaisseur préférentielles.

Ainsi par exemple, pour des bandages pneumatiques de type tourisme, elle peut avoir une épaisseur d'au moins 0,05 mm, préférentiellement comprise entre 0,1 et 2 mm. Selon un autre exemple, pour des bandages pneumatiques de véhicules poids lourds ou agricole, l'épaisseur préférentielle peut se situer entre 1 et 3 mm. Selon un autre exemple, pour des bandages pneumatiques de véhicules dans le domaine du génie civil ou pour avions, l'épaisseur préférentielle peut se situer entre 2 et 10 mm.

Comparativement à une couche étanche à l'air usuelle à base de caoutchouc butyl, la couche étanche à l'air selon l'invention a l'avantage de présenter non seulement une hystérèse plus faible, et donc d'offrir une résistance au roulement réduite aux bandages pneumatiques, mais encore une étanchéité au moins égale sinon largement améliorée, comme cela est démontré dans les exemples de réalisation qui suivent.

## II. EXEMPLES DE REALISATION DE L'INVENTION

La couche étanche aux gaz précédemment décrite est avantageusement utilisable dans les bandages pneumatiques de tous types de véhicules, en particulier véhicules tourisme ou véhicules industriels tels que Poids-lourd.

A titre d'exemple, la figure unique annexée représente de manière très schématique (sans respect d'une échelle spécifique), une coupe radiale d'un bandage pneumatique conforme à l'invention.

Ce bandage pneumatique 1 comporte un sommet 2 renforcé par une armature de sommet ou ceinture 6, deux flancs 3 et deux bourrelets 4, chacun de ces bourrelets 4 étant renforcé avec une tringle 5. Le sommet 2 est surmonté d'une bande de roulement non représentée sur cette figure schématique. Une armature de carcasse 7 est enroulée autour des deux tringles 5 dans chaque bourrelet 4, le retournement 8 de cette armature 7 étant par exemple disposé vers l'extérieur du pneumatique 1 qui est ici représenté monté sur sa jante 9. L'armature de carcasse 7 est de manière connue en soi constituée d'au moins une nappe renforcée par des câbles dits « radiaux », par exemple textiles ou métalliques, c'est-à-dire que ces câbles sont disposés pratiquement parallèles les uns aux autres et s'étendent d'un bourrelet à l'autre de manière à former un angle compris entre 80° et 90° avec le plan circonférentiel médian (plan perpendiculaire à l'axe de rotation du pneumatique qui est situé à mi-distance des deux bourrelets 4 et passe par le milieu de l'armature de sommet 6.

La paroi interne du bandage pneumatique 1 comporte une couche 10 étanche à l'air, par exemple d'épaisseur égale à environ 0,9 mm, du côté de la cavité interne 11 du bandage pneumatique 1.

Cette couche interne (ou *"inner liner"*) couvre toute la paroi interne du bandage pneumatique, se prolongeant d'un flanc à l'autre, au moins jusqu'au niveau du crochet de jante lorsque le bandage pneumatique est en position montée. Elle définit la face radialement interne dudit bandage destinée à protéger l'armature de carcasse de la diffusion d'air provenant de l'espace 11 intérieur au bandage. Elle permet le gonflement et le maintien sous pression du bandage pneumatique ; ses propriétés d'étanchéité doivent lui permettre de garantir un taux de perte de pression relativement faible, de maintenir le bandage gonflé, en état de fonctionnement normal, pendant une durée suffisante, normalement de plusieurs semaines ou plusieurs mois.

Contrairement à un bandage pneumatique conventionnel utilisant une composition à base de caoutchouc butyl, le bandage pneumatique conforme à l'invention utilise dans cet exemple, comme couche 10 étanche à l'air, une composition élastomère comportant un élastomère SIBS (« Sibstar 102T » avec un taux de styrène d'environ 15%, une Tg d'environ - 65°C et une Mn d'environ 90 000 g/mol) étendu par exemple avec une huile PIB (par exemple 40 pce d'huile « Dynapak Poly 190 » - Mn de l'ordre de 1000 g/mol), ainsi qu'une charge lamellaire.

Le pneumatique pourvu de sa couche étanche à l'air (10) tel que décrit ci-dessus peut être réalisé avant ou après vulcanisation (ou cuisson).

Dans le premier cas (i.e., avant cuisson du bandage pneumatique), la couche étanche à l'air est simplement appliquée de façon conventionnelle à l'endroit souhaité, pour formation de la couche 10. La vulcanisation est ensuite effectuée classiquement. Les élastomères TPS supportent bien les contraintes liées à l'étape de vulcanisation.

Une variante de fabrication avantageuse, pour l'homme du métier des bandages pneumatiques, consistera par exemple au cours d'une première étape, à déposer à plat la couche étanche à l'air directement sur un tambour de confection, sous la forme d'une couche

(*"skim"*) d'épaisseur adaptée, avant de recouvrir cette dernière avec le reste de la structure du bandage pneumatique, selon des techniques de fabrication bien connues de l'homme du métier.

Dans le second cas (i.e. après cuisson du bandage pneumatique), la couche étanche est appliquée à l'intérieur du bandage pneumatique cuit par tout moyen approprié, par exemple par collage, par pulvérisation ou encore extrusion et soufflage d'un film d'épaisseur appropriée.

II-1. Tests d'étanchéité

Dans les exemples qui suivent, les propriétés d'étanchéité ont tout d'abord été analysées sur des éprouvettes de compositions à base de caoutchouc butyl d'une part, d'élastomère TPS d'autre part et avec des charges lamellaires de nature variable.

Pour cette analyse, on a utilisé un perméamètre à parois rigides, placé dans une étuve (température de 60°C dans le cas présent), muni d'un capteur de pression relative (étalonné dans le domaine de 0 à 6 bars) et relié à un tube équipé d'une valve de gonflage. Le perméamètre peut recevoir des éprouvettes sous forme de disque (par exemple de diamètre 65 mm dans le cas présent) et d'épaisseur uniforme pouvant aller jusqu'à 1,5 mm (0,5 mm dans le cas présent). Le capteur de pression est connecté à une carte d'acquisition de données *National Instruments* (acquisition quatre voies analogiques 0-10 V) qui est reliée à un ordinateur réalisant une acquisition en continu avec une fréquence de 0,5 Hz (1 point toutes les deux secondes). Le coefficient de perméabilité (K) est mesuré à partir de la droite de régression linéaire donnant la pente $\alpha$ de la perte de pression à travers l'éprouvette testée en fonction du temps, après stabilisation du système c'est-à-dire obtention d'un régime stable au cours duquel la pression décroît linéairement en fonction du temps.

A) Essai 1

Des compositions étanches aux gaz contenant un élastomère SIBS (« Sibstar 102T »), une huile PIB (« Dynapak P 190 ») et différentes charges lamellaires de type mica ont été préparées par extrusion bi-vis à une température supérieure à la température de ramollissement de l'élastomère TPS utilisé permettant ainsi une mise en oeuvre liquide du matériau. Les charges lamellaires ont été introduites dans l'élastomère SIBS et l'huile PIB par extrusion.

La composition étanche témoin est une composition conventionnelle pour couche interne, à base de caoutchouc butyl et de noir de carbone (sans charge lamellaire). La formulation est présentée dans le tableau 1.

**Tableau 1 : formulation couche interne** (en pce)

| | |
|---|---|
| Élastomère butyl (1) | 100 |
| Noir de carbone (N772) | 50 |
| Oxyde de zinc | 1,5 |
| Acide stéarique | 1,5 |
| Sulfénamide | 1,2 |
| Soufre | 1,5 |
| (1) : polyisobutylène bromé « BROMOBUTYL 2222 » commercialisé par la société EXXON CHEMICAL Co. | |

L'étanchéité a été mesurée sur éprouvettes selon le mode opératoire décrit ci-dessus.

Le tableau **2** présente les caractéristiques de taille et de facteur de forme des trois charges lamellaires de type mica utilisées.

**Tableau 2**

| Charge lamellaire | $D_v$ (0,5) ($\mu$m) | BET (m²/g) | F | |
|---|---|---|---|---|
| Mica - A41S[1] | **42** | 3,7 | **73** | **C-3** |

(suite)

| Charge lamellaire | $D_v$ (0,5) ($\mu$m) | BET (m²/g) | F | |
|---|---|---|---|---|
| Mica - Mica-MU® 247[2] | 81 | 2,7 | **104** | C-4 |
| Mica - MS 30-80[3] | **45** | 2,7 | 57 | C-5 |
| [1] : Fournisseur : Yamaguchi ;<br>[2] : Fournisseur : CMMP ;<br>[3] : Fournisseur : GEOKOM. | | | | |

Les quatre formulations des compositions étanches du premier essai ainsi que leurs performances relatives, par rapport au témoin à base de caoutchouc butyl (composition C-1), sont indiquées dans le tableau **3** qui suit. Les taux de plastifiant sont exprimés en pce, ceux de charge lamellaire en pce (par rapport au poids d'élastomère SIBS) ainsi qu'en % volumique (par rapport au volume total de la composition).

**Tableau 3**

| Composition N°: | | C-1 | C-2 | **C-3** | C-4 | C-5 |
|---|---|---|---|---|---|---|
| Couche interne à base de butyl | | 100 | - | - | - | - |
| SIBS - Sibstar 102T | | - | 100 | 100 | 100 | 100 |
| Huile PIB - Dynapak P 190 (pce) | | - | 66,7 | 66,7 | 66,7 | 66,7 |
| Mica - A41S[1] | (pce)<br>(%vol) | - | - | 39,4<br>7,5 | - | - |
| Mica - Mica-MU® 247[2] | (pce)<br>(%vol) | - | - | - | 39,4<br>7,5 | - |
| Mica - MS 30-80[3] | (pce)<br>(%vol) | - | - | - | - | 39,4<br>7,5 |
| Étanchéité relative (%) | | 100 | 46 | **95** | 77 | 74 |

La formulation C-2 comprend le Sibstar 102T comme élastomère et 66,7 pce d'huile d'extension PIB. Cette formulation présente une étanchéité relative bien inférieure à celle du témoin.

L'ajout de charges lamellaires à un taux de 39,4 pce améliore sensiblement la performance d'étanchéité des compositions à base de Sibstar 102T jusqu'à pratiquement égaler la performance du témoin. On note aussi de fortes disparités en fonction du type de la charge lamellaire utilisée.

Seule la compositions C-3 utilise une charge conforme à un objet de l'invention.

Cette composition C-3 présente une étanchéité relative pratiquement identique à celle du témoin C-1. En revanche, la composition C-4 qui comprend une charge lamellaire de taille $D_v$ (0,5) supérieure à la gamme [20-45] micromètres a une étanchéité relative sensiblement diminuée par rapport au témoin C-1 et par rapport à celle de la composition C-3. La composition C-5 comprend une charge lamellaire de taille $D_v$ (0,5) égale à 45 $\mu$m, donc comparable à celle de la charge de la composition C-3, en revanche son facteur de forme F est égal à 56, inférieur à la valeur seuil de 65. L'étanchéité relative de la composition C-5 est de 74 soit très inférieure à celles du témoin C-1 et de la composition C-3. On voit ainsi que la conjonction des deux paramètres est nécessaire pour déterminer les caractéristiques préférentielles des charges lamellaires.

B) Essai 2

D'autres compositions étanches aux gaz ont été préparées, contenant l'élastomère SIBS (« Sibstar 102T »), l'huile PIB (« **INDOPOL H1200** ») et quatre charges lamellaires de type mica. Les charges lamellaires ont été introduites dans l'élastomère **SIBS** et l'huile **PIB** par extrusion bi-vis et à une température supérieure à la température de ramollissement de l'élastomère.

La composition étanche témoin est identique à celle de l'essai 1.

Le tableau **4** présente les caractéristiques de taille et de facteur de forme des trois charges lamellaires de type mica utilisées.

**Tableau 4**

| Charge lamellaire | $D_v$ (0,5) (μm) | BET (m²/g) | F | |
|---|---|---|---|---|
| Mica - Iriodin® 153[1] | 47 | 4,0 | **89** | C-7 |
| Mica - A51S[2] | **44** | 3,4 | **72** | **C-8** |
| Mica - SYA-21R[2] | **25** | 8,0 | **94** | **C-9** |
| Mica - MS 30-80[3] | **45** | 2,7 | 57 | C-10 |
| [1] : Fournisseur : Merck ; [2] : Fournisseur : Yamaguchi ; [3] : Fournisseur : GEOKOM. | | | | |

Les quatre formulations des compositions étanches du second essai ainsi que leurs performances relatives, par rapport au témoin à base de caoutchouc butyl (composition C-1), sont indiquées dans le tableau **5** qui suit. Les taux de plastifiant sont exprimés en pce, ceux de charge lamellaire en pce (par rapport au poids d'élastomère SIBS) ainsi qu'en % volumique (par rapport au volume total de la composition).

**Tableau 5**

| Composition N° : | | C-1 | C-6 | C-7 | **C-8** | **C-9** | C-10 |
|---|---|---|---|---|---|---|---|
| Caoutchouc butyl | | 100 | - | - | - | - | - |
| SIBS - Sibstar 102T | | - | 100 | 100 | 100 | 100 | - |
| Huile PIB - INDOPOL H 1200 (pce) | | - | 66,7 | 66,7 | 66,7 | 66,7 | - |
| Mica - Iriodin® 153 | (pce) (%vol) | - | - | 39,4 7,5 | - | - | - |
| Mica-A51S | (pce) (%vol) | - | - | - | 39,4 7,5 | - | - |
| Mica - SYA-21 R | (pce) (%vol) | - | - | - | - | 39,4 7,5 | - |
| Mica - MS 30-80 | (pce) (%vol) | - | - | - | - | - | 39,4 7,5 |
| Étanchéité relative (%) | | 100 77 | | 155 | **215** | **204** | 97 |

Les quatre compositions C-7 à C-10 qui comprennent toutes une charge lamellaire de type mica à un taux volumisue de 7,5 % voient leurs étanchéités relatives sensiblement améliorées ou identiques à celle du témoin.
Cet essai permet à nouveau de mettre en évidence l'importance de la nature des charges lamellaires vis-à-vis de la performance d'étanchéité.
Les compositions C-8 et C-9 utilisent chacune une charge lamellaire conforme à un objet de l'invention. Leurs performances d'étanchéité sont doublées par rapport au témoin.
La composition C-7 utilise une charge lamellaire dont la taille est trop élevée par rapport à celles préconisées dans la présente demande. Sa performance d'étanchéité est intermédiaire entre celles du témoin et des deux compositions conformes. La composition C-10 utilise une charge lamellaire dont la taille est conforme mais dont le facteur de forme F est inférieur à la limite choisie. La performance d'étanchéité de cette composition est similaire à celle du témoin.

II-2. Tests en bandage pneumatique

A la suite des tests de laboratoire ci-dessus, des bandages pneumatiques, du type pour véhicule tourisme (dimension 195/65 R15), ont été fabriqués, leur paroi interne étant recouverte par une couche étanche à l'air (10) d'une épaisseur donnée constante (posée sur tambour de confection, avant fabrication du reste du pneumatique). Puis, les pneumatiques ont été vulcanisés.
Les caractéristiques des charges lamellaires utilisées se trouvent dans le tableau 6.

**Tableau 6**

| Charge lamellaire | $D_v(0,5)$ ($\mu$m) | BET ($m^2/g$) | F | |
|---|---|---|---|---|
| Mica - SYA-41R[1] | **39** | 4,6 | **86** | **C-11** |
| Mica - Mica-MU® 280[2] | 98 | 1,8 | **84** | C-12 |
| [1]Fournisseur : Yamaguchi ; [2]Fournisseur : CMMP. | | | | |

Les formulations des couches étanches se trouvent dans le tableau 7.

**Tableau 7**

| Composition N° : | C-1 | **C-11** | C-12 |
|---|---|---|---|
| Caoutchouc butyl | 100 | - | - |
| SIBS - Sibstar 102T | - | 100 | 100 |
| Huile PIB - Dynapak P 190 (pce) | - | 66,7 | 66,7 |
| Mica - SYA-41R (pce) (%vol) | - | 39,4 7,5 | |
| Mica - Mica-MU® 280 (pce) (%vol) | - | - | 39,4 7,5- |
| Étanchéité relative (%) | 100 | 103 | 65 |
| | | | |
| Perte de pression bandage pneumatique (mbar) | 47,5 | 46 | 73 |

Les bandages pneumatiques conformes à l'invention ont été comparés à un bandage pneumatique témoin (marque Michelin « Energy 3 » de même dimension 195/65 R15) comportant une couche étanche à l'air conventionnelle, de même épaisseur, à base de caoutchouc butyl. L'étanchéité des deux types de bandages a été mesurée (perte de pression à 20°C après 4 semaines, pression initiale : 2,5 bars) ; les résultats de ces pertes de pression sont tout à fait en accord avec les résultats laboratoires effectués sur les compositions étanches (voir tableau 7).

La résistance au roulement des bandages pneumatiques a aussi été mesurée sur un volant, selon la méthode ISO 87-67 (1992). On a constaté que les bandages pneumatiques de l'invention présentaient une résistance au roulement réduite de manière très significative et inattendue pour l'homme du métier, de près de 4% par rapport au bandage pneumatique témoin.

En conclusion, l'invention offre aux concepteurs de bandages pneumatiques l'opportunité de réduire l'hystérèse des couches internes d'étanchéité de manière très sensible, et donc la consommation de carburant des véhicules automobiles équipés de tels bandages, tout en assurant une étanchéité au moins égale, sinon supérieure à celle obtenue avec une couche étanche à l'air conventionnelle en caoutchouc butyl.

**Revendications**

**1.** Objet pneumatique pourvu d'une couche étanche aux gaz de gonflage, ladite couche comportant une composition élastomère comprenant au moins, à titre de seul élastomère ou d'élastomère majoritaire en poids, un élastomère thermoplastique styrénique (« TPS ») et une charge lamellaire, **caractérisé en ce que** la charge lamellaire a un diamètre équivalent ($D_v$ (0,5)) compris entre 20 et 45 micromètres et **en ce que** la charge lamellaire a un facteur de forme (F) supérieur à 65 avec :

$$F = \frac{S_{BET}}{S_{sphère}} = \frac{\rho S_{BET} D_v(0,5)}{6},$$

dans lequel :

- $S_{BET}$ est la surface spécifique de la charge lamellaire mesurée par BET en m$^2$/g ;
- $S_{sphère}$ est la surface spécifique d'une sphère de diamètre équivalent ($D_v$ (0,5)) identique en m$^2$/g ;
- Dv(0,5) est le diamètre équivalent en $\mu$m obtenu avec un granulomètre laser et correspondant au diamètre en dessous duquel 50% de la population totale est présente ;
- $p$ est la masse volumique de la charge lamellaire en g/cm$^3$.

**2.** Objet pneumatique selon la revendication 1, dans lequel l'élastomère thermoplastique styrénique (TPS) comporte un bloc élastomère à base de butyl.

**3.** Objet pneumatique selon la revendication 2, dans lequel l'élastomère thermoplastique est un copolymère à blocs styrénique et isobutylène.

**4.** Objet pneumatique selon la revendication 3, dans lequel l'élastomère thermoplastique est un copolymère styrène/ isobutylène/ styrène.

**5.** Objet pneumatique selon l'une quelconque des revendications 1 à 4, dans lequel la composition élastomère comporte en outre une huile d'extension de l'élastomère thermoplastique.

**6.** Objet pneumatique selon la revendication 5, dans lequel l'huile d'extension de l'élastomère thermoplastique est une huile polyisobutylène.

**7.** Objet pneumatique selon l'une quelconque des revendications 1 à 6, dans lequel la charge lamellaire est choisie dans le groupe constitué par les graphites, les phyllosilicates, et les mélanges de telles charges.

**8.** Objet pneumatique selon la revendication 7, dans lequel la charge lamellaire est choisie dans les micas.

**9.** Objet pneumatique selon la revendication 7, dans lequel le taux de charge lamellaire est compris entre 2 et 30 % volumique, et préférentiellement entre 3 et 20 % volumique.

**10.** Objet pneumatique selon l'une quelconque des revendications 1 à 8, dans lequel la couche étanche aux gaz a une épaisseur supérieure à 0,05 mm.

**11.** Objet pneumatique selon la revendication 10, dans lequel la couche étanche aux gaz a une épaisseur comprise entre 0,1 mm et 10 mm, de préférence comprise entre 0,1 et 1,0 mm.

**12.** Objet pneumatique selon la revendication 11, dans lequel la couche étanche aux gaz est disposée sur la paroi interne de l'objet pneumatique.

**13.** Objet pneumatique selon l'une quelconque des revendications 1 à 12, dans lequel ledit objet est en caoutchouc.

**14.** Objet pneumatique selon la revendication 13, dans lequel ledit objet en caoutchouc est un bandage pneumatique.

**15.** Objet pneumatique selon l'une quelconque des revendications 1 à 13, dans lequel ledit objet pneumatique est une chambre à air.

**16.** Objet pneumatique selon la revendication 15, dans lequel ladite chambre à air est une chambre à air de bandage pneumatique.

**Patentansprüche**

**1.** Pneumatisches Objekt, das mit einer aufpumpgasdichten Schicht versehen ist, wobei die Schicht eine Elastomerzusammensetzung umfasst, die mindestens als einziges Elastomer oder gewichtsmäßig überwiegendes Elastomer ein thermoplastisches Styrolelastomer (**"TPS"**-Elastomer) und einen plättchenförmigen Füllstoff umfasst, **dadurch gekennzeichnet, dass** der plättchenförmige Füllstoff einen Äquivalentdurchmesser ($D_v$ (0,5)) zwischen 20 und 45 Mikrometer aufweist und dass der plättchenförmige Füllstoff einen Formfaktor (F) von mehr als 65 aufweist, wobei:

$$F = \frac{S_{BET}}{S_{Kugel}} = \frac{\rho S_{BET} D_v(0,5)}{6},$$

worin:

- $S_{BET}$ für die nach der BET-Methode spezifische Oberfläche des plättchenförmigen Füllstoffs in $m^2/g$ steht;
- $S_{Kugel}$ für die spezifische Oberfläche einer Kugel mit dem gleichen Äquivalentdurchmesser ($D_v(0,5)$) in $m^2/g$ steht;
- $D_v(0,5)$ für den mit einem Laser-Teilchen-größenbestimmungsgerät bestimmten und dem Durchmesser, unter dem 50% der gesamten Population vorliegen, entsprechenden Äquivalentdurchmesser in $\mu$m steht;
- $\rho$ für die Dichte des plättchenförmigen Füllstoffs in $g/cm^3$ steht.

2. Pneumatisches Objekt nach Anspruch 1, wobei das thermoplastische Styrolelastomer (TPS-Elastomer) einen Elastomerblock auf Butylbasis umfasst.

3. Pneumatisches Objekt nach Anspruch 2, wobei es sich bei dem thermoplastischen Elastomer um ein Copolymer mit Styrol- und Isobutylen-Blöcken handelt.

4. Pneumatisches Objekt nach Anspruch 3, wobei es sich bei dem thermoplastischen Elastomer um ein Styrol/Isobutylen/Styrol-Copolymer handelt.

5. Pneumatisches Objekt nach einem der Ansprüche 1 bis 4, wobei die Elastomerzusammensetzung außerdem ein Strecköl für das thermoplastische Elastomer umfasst.

6. Pneumatisches Objekt nach Anspruch 5, wobei es sich bei dem Strecköl für das thermoplastische Elastomer um ein Polyisobutylenöl handelt.

7. Pneumatisches Objekt nach einem der Ansprüche 1 bis 6, wobei der plättchenförmige Füllstoff aus der Gruppe bestehend aus Graphiten, Phyllosilikaten und Mischungen derartiger Füllstoffe ausgewählt ist.

8. Pneumatisches Objekt nach Anspruch 7, wobei der plättchenförmige Füllstoff aus Glimmern ausgewählt ist.

9. Pneumatisches Objekt nach Anspruch 7, wobei der Gehalt an plättchenförmigem Füllstoff zwischen 2 und 30 Vol.-% und vorzugsweise zwischen 3 und 20 Vol.-% liegt.

10. Pneumatisches Objekt nach einem der Ansprüche 1 bis 8, wobei die gasdichte Schicht eine Dicke von mehr als 0,05 mm aufweist.

11. Pneumatisches Objekt nach Anspruch 10, wobei die gasdichte Schicht eine Dicke zwischen 0,1 mm und 10 mm und vorzugsweise zwischen 0,1 und 1,0 mm aufweist.

12. Pneumatisches Objekt nach Anspruch 11, wobei die gasdichte Schicht an der Innenwand des pneumatischen Objekts angeordnet ist.

13. Pneumatisches Objekt nach einem der Ansprüche 1 bis 12, wobei das Objekt aus Kautschuk besteht.

14. Pneumatisches Objekt nach Anspruch 13, wobei es sich bei dem Objekt aus Kautschuk um einen Luftreifen handelt.

15. Pneumatisches Objekt nach einem der Ansprüche 1 bis 13, wobei es sich bei dem pneumatischen Objekt um einen Luftschlauch handelt.

16. Pneumatisches Objekt nach Anspruch 15, wobei es sich bei dem Luftschlauch um einen Luftschlauch für einen Luftreifen handelt.

**Claims**

1. Inflatable article provided with a layer impermeable to inflation gases, said layer having an elastomer composition comprising at least, as the sole elastomer or as the predominant elastomer by weight, a thermoplastic styrene (TPS) elastomer and a platy filler, **characterized in that** the platy filler has an equivalent diameter ($D_v$ (0.5)) of between 20 and 45 micrometres and **in that** the platy filler has a shape factor (F) greater than 65 with:

$$F = \frac{S_{BET}}{S_{sphere}} = \frac{\rho S_{BET} D_V (0.5)}{6},$$

   in which:

   - $S_{BET}$ is the specific surface area of the platy filler measured by the BET method, in m²/g;
   - $S_{sphere}$ is the specific surface area of a sphere of identical equivalent diameter ($D_v$ (0.5)), in m²/g;
   - Dv(0.5) is the equivalent diameter in µm obtained with a laser particle size analyser and which is the diameter below which 50% of the total population is present; and
   - p is the density of the platy filler in g/cm³.

2. Inflatable article according to Claim 1, in which the thermoplastic styrene (TPS) elastomer comprises a butyl-based elastomer block.

3. Inflatable article according to Claim 2, in which the thermoplastic elastomer is a copolymer containing styrene and isobutylene blocks.

4. Inflatable article according to Claim 3, in which the thermoplastic elastomer is a styrene/isobutylene/styrene copolymer.

5. Inflatable article according to any one of Claims 1 to 4, in which the elastomer composition also comprises an extender oil for the thermoplastic elastomer.

6. Inflatable article according to Claim 5, in which the extender oil for the thermoplastic elastomer is a polyisobutylene oil.

7. Inflatable article according to any one of Claims 1 to 6, in which the platy filler is chosen from the group composed of graphites, phyllosilicates and mixtures of such fillers.

8. Inflatable article according to Claim 7, in which the platy filler is chosen from micas.

9. Inflatable article according to Claim 7, in which the platy filler content is between 2 and 30 vol%, and preferably between 3 and 20 vol%.

10. Inflatable article according to any one of Claims 1 to 8, in which the gastight layer has a thickness greater than 0.05 mm.

11. Inflatable article according to Claim 10, in which the gastight layer has a thickness between 0.1 mm and 10 mm, preferably between 0.1 and 1.0 mm.

12. Inflatable article according to Claim 11, in which the gastight layer is positioned on the inner wall of the inflatable article.

13. Inflatable article according to any one of Claims 1 à 12, in which said article is made of rubber.

14. Inflatable article according to Claim 13, in which said rubber article is a pneumatic tyre.

15. Inflatable article according to any one of Claims 1 à 13, in which said inflatable article is an inner tube.

16. Inflatable article according to Claim 15, in which said inner tube is a pneumatic tyre inner tube.

**Figure**

**EP 2 459 645 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2009007064 A
- EP 731112 A
- US 4946899 A
- US 5260383 A
- EP 1431343 A
- EP 1561783 A
- EP 1566405 A
- WO 2005103146 A